# EUROPEAN PATENT SPECIFICATION

(11) **EP 4 493 901 B1**
(45) Date of publication and mention of the grant of the patent: **12.03.2025**
(21) Application number: 23783331.4
(22) Date of filing: 28.09.2023
(51) Int. Cl.: G01M 5/00, G01B 11/16, G01L 5/24, F16B 31/02

(54) **MEASUREMENT NUT**
MESSMUTTER
ECROU DE MESURE

(30) Priority: 30.09.2022 SE 2251134
(43) Date of publication of application: 22.01.2025
(73) Proprietor: TensionCam Systems AB, 421 32 Västra Frölunda (SE)
(72) Inventor: NILSAGÅRD, Jonas, 417 60 Göteborg (SE)
(74) Representative: Valea AB
(86) International application number: PCT/EP2023/076940
(87) International publication number: WO 2024/068865

(56) References cited:
- WO-A1-2018/103805
- WO-A1-2021/090265
- CA-A1- 3 196 250
- GB-A- 2 566 575
- US-A- 3 718 066
- US-A- 6 131 302
- US-A1- 2004 065 154
- US-A1- 2008 178 713
- US-A1- 2010 050 778
- US-A1- 2010 208 940
- US-A1- 2012 185 002
- US-A1- 2014 283 617
- US-B1- 8 521 448
- US-B2- 11 320 028
- US-B2- 7 024 938
- US-B2- 8 337 128
- GONG HAO ET AL: "Quantitative loosening detection of threaded fasteners using vision-based deep learning and geometric imaging theory", AUTOMATION IN CONSTRUCTION, ELSEVIER, AMSTERDAM, NL, vol. 133, 19 October 2021 (2021-10-19), XP086882603, ISSN: 0926-5805, [retrieved on 20211019], DOI: 10.1016/J.AUTCON.2021.104009
- XIE YANXIA ET AL: "On-line bolt-loosening detection method of key components of running trains using binocular vision", PROCEEDINGS OF SPIE; [PROCEEDINGS OF SPIE ISSN 0277-786X VOLUME 10524], SPIE, US, vol. 10605, 15 November 2017 (2017-11-15), pages 1060513 - 1060513, XP060098587, ISBN: 978-1-5106-1533-5, DOI: 10.1117/12.2286728
- YANG XINYUE ET AL: "Deep learning-based bolt loosening detection for wind turbine towers", STRUCTURAL CONTROL AND HEALTH MONITORING, vol. 29, no. 6, 18 February 2022 (2022-02-18), US, XP093024011, ISSN: 1545-2255, Retrieved from the Internet <URL:https://onlinelibrary.wiley.com/doi/full-xml/10.1002/stc.2943> DOI: 10.1002/stc.2943

## Description

### TECHNICAL FIELD

The present invention relates to a method of determining a dimension change of a measurement nut. The present invention further relates to a measurement nut and a measurement system comprising the measurement nut.

### BACKGROUND

In mechanical systems, it may sometimes be interesting to determine tension induced from forces applied to an object, e.g. torque or axial tension.

In conventional techniques for measuring tension, the tension may be measured at the object itself. Thereby, a sensor is fastened to the object to be measured, and then an electrical coupling is established between the sensor and analyzing electronics. This has drawbacks, for instance in a need for the electrical coupling to be maintained with a suitable quality over time. The sensors may e.g. be strain gauges. Strain gauges are however quite expensive and not easy to use in real sites. They are thus not especially suited for routine setups. They will need calibration before measurement to obtain reliable measurements. Strain gauges are typically glued to the object to be measured. However, the glue is often not stable over time and there will thus be a need for recalibration to obtain reliable measurements over time.

In some prior art solutions, the tension is instead determined by means of a measurement nut, which is attached to the object, e.g. by screwing onto a threaded object such as a threaded rod. The tension in the object is concluded from a measurement on the measurement nut.

Patent document US 2006/0225511 A1 discloses a device for measuring pre-stressing force in a bolt/nut connection. The device comprises a screw nut that is provided with a sensor means for sensing the pre-stressing force. The nut is of standard design, and the nut itself constitutes a sensor body in that, in the outer peripheral surface of the nut. There is machined at least one recess in which there is placed a sensor that is adapted for sensing mechanical stress in the nut, and for providing a signal representing the stress, for transmission to an external recording device. However, by providing the nut with a machined recess, the nut itself is weakened, which influences its mechanical properties in a negative way.

When measuring tension of an object, there is a desire to measure as accurately as possible. Further, it is desirable that the measurement should be easy and quick to perform. There is also a desire that the measurement should be possible to perform with the object being situated in its intended position, e.g. in a construction, i.e. not in a test rig.

In addition, it is desirable that the load bearing capacity and the life properties of the measurement nut is not negatively affected by a provided weakening, e.g. like the recesses disclosed in US 2006/0225511 A1 .

Patent document US 8,337,128 B2 discloses a retrofit system for providing a load indicator on a foundation bolt. The system includes a fastener having a fastener head, gauge length and central fastener bore in the gauge length and head. A datum rod is anchored in the central bore with a free datum rod being moveable longitudinally relative to the fastener head during elongation of the fastener gauge length. An internally threaded fastener portion below the central fastener bore is configured to thread over a foundation bolt. A compression sleeve positioned over the foundation bolt is configured to receive the load indicating fastener therein and to bear the compressive forces of the fastening. Elongation of the gauge length as the fastener is tightened onto the stud is manifest as displacement of the datum rod end, which displacement is measured to provide an indication of fastener loading.

### SUMMARY

The object of the present disclosure is to overcome or ameliorate at least one of the disadvantages of the prior art, or to provide a useful alternative.

The object above may be achieved by the subject-matter of the independent claims. Variations of the invention are set out in the dependent claims, in the following description and in the drawings.

Thus, according to a first aspect of the present invention, there is provided a method according to claim 1 of determining a dimension change of a measurement nut, wherein the measurement nut comprises a contact portion, adapted for attachment to an object, such as a bolt or a threaded rod, and a non-contact portion, the contact portion and the non-contact portion being located coaxially, but axially offset, in relation to each other. The method comprises
- attaching at least part of the contact portion to the object, the non-contact portion being without direct contact to the object,
- exposing the object to an external load, thereby causing a dimension change of the contact portion of the measurement nut, and
- determining the dimension change of the measurement nut by measurement at the non-contact portion.

The dimension change of the measurement nut is caused by a tension, to which the measurement nut is exposed, which tension in turn is a result of the external load being applied to the object. Expressed the other way around: when the object is exposed to the external load, the external load induces a tension in the object and thus also induces a tension in the measurement nut via the contact portion, which is in direct contact with the object. Hence, the external load will cause a dimension change of the contact portion but also of the non-contact portion. By measuring at the non-contact portion of the measurement nut, instead of at the contact portion of the measurement nut, the non-contact portion may be used to amplify the dimension change of the contact portion. Experiments have shown that an amplification of up to 10-25 times is possible. Consequently, the dimension change of the measurement nut, and thus indirectly the tension of the object, may be measured with a higher accuracy as compared to prior art solutions measuring with a measurement nut being in full contact with the object, as in the device of US 2006/0225511 A1, or at the object itself.

The tensioned state of the measurement nut, measured at the non-contact portion as described herein, may be compared to a measurement of an untensioned state or at a state of known tension in order to establish the dimension change. This is further described below.

The object is typically a mechanical component, e.g. a bolt or a threaded rod or any other mechanical component, which may be exposed to tension. The object may include an externally threaded portion. The mechanical component may form part of a fastening arrangement. Further, tension may be desirable to determine for structures being load bearing. The object may thus be part of another larger entity, such as an apparatus, a machine or a vehicle.

The external load applied to the object may be a pull force, a pressing force, a pressure, a shearing force, a torsional force, a bending force, gravity, a force caused by a temperature difference or any combination of such forces. Such forces are known to induce tension in the object, which may be determined with the method of determining a dimension change of a measurement nut, with the measurement nut and with the measurement system as described herein.

The contact portion of the measurement nut is adapted for attachment to the object. Hence, the contact portion may be threaded, e.g. being provided with an internal thread surrounding an internal bore. In that case, the internal thread of the contact portion is typically intended to be attached to a corresponding external thread of the object to be measured. Alternatively, or as a complement, the contact portion may be attached to the object by any other means, such as by welding, press-fitting, one or more clamps, one or more clips, an adhesive or combinations thereof. When the contact portion is attached to the object, i.e. put in direct contact to the object, e.g. via the thread, the non-contact portion remains without any direct contact to the object. The non-contact portion is, however, in indirect contact to the object via the contact portion. Hence, the non-contact portion may change its dimension independently of the object. The non-contact portion may e.g. be axially offset from the object.

The measurement is performed at a top surface of the non-contact portion. At least a part of the surface faces in an axial direction of the measurement nut. Measurement at the top surface may be beneficial, when there is limited space around the measurement nut, such that it would be difficult to access one or more side surfaces. If measuring at the top surface, a single measurement may be sufficient, the measurement preferably being performed at or around a length axis of the measurement nut. The term top surface refers to that the surface is located at the top of the non-contact surface. Dependent on how the measurement nut is attached to the object, the top surface may face in any direction, e.g. downwards.

Measurement at the top surface may be advantageous when the measurement nut is a capped nut comprising a capping part, which is comprised in the non-contact portion of the measurement nut. In that case, the measurement is typically performed at a top surface of the capping part, preferably at or around a length axis of the measurement nut. If capped, the measurement nut is preferably positioned such that the non-contact portion is axially offset from the object.

As an alternative, not covered by the claimed invention, or as a complement to measuring at the top surface, the measurement may be performed at at least one side surface of the non-contact portion, such as at two or three side surfaces. Measurement at at least one side surface may be beneficial, when there is limited space around the top surface of the measurement nut is inaccessible.

Measurements may be performed at each side surface of the measurement nut. If measurements are not made at each side surface, it is typically beneficial to select the side surfaces to be measured, such that they are not adjacent to each other and such that they are evenly distributed around the circumference of the measurement nut. A typical nut comprises six side surfaces and so does also a typical measurement nut. Hence, measurement may e.g. be performed at all six side surfaces, at three side surfaces spaced 120 degrees apart or at two opposing side surfaces spaced 180 degrees apart. If measuring at side surfaces, it may be beneficial to measure at more than one side surface in order to capture a possibly non-symmetrical dimension change of the measurement nut.

The contact portion of the measurement nut may comprise a threaded first part and a threaded second part, the non-contact portion being located between the threaded first part and the threaded second part of the contact portion, wherein the measurement is performed at the non-contact portion between the threaded first part and the threaded second part of the contact portion. Preferably the measurement is performed halfway between the threaded first part and the threaded second part of the contact portion. This way of using the method is beneficial when the object is a rod, such as a threaded rod, for which the side portions of the measurement nut are accessible from the side of the rod. In that case, the measurement nut will follow the axial movement of the rod when the rod is exposed to an external load.

The method may comprise attaching the measurement nut to the object such that an axial length of the non-contact portion is within the range of 25%-3000% of an axial length of the part of the contact portion being in direct contact with the object, e.g. 50%-1000% or 50%-500% or 50%-250% or 75%-125%.

Typically, the whole axial length of the contact portion of the measurement nut is in direct contact with the object. By letting the same axial length be in direct contact for each measurement, it is ascertained that the measurement nut is attached in a corresponding way for each measurement, thus making it possible to compare measurements made at different tension states of the measurement nut.

The measurement may be performed in a measurement recess provided at a top surface of the non-contact portion, and, as an option, in addition at at least one side surface. There may be measurement recesses provided at a plurality of the side surfaces of the non-contact portion, such as at two, three, or all side surfaces of the non-contact portion. Measurement recesses may be provided at each side surface of the non-contact portion. The measurement recess may typically have a circular cross-section. The depth of the measurement recess is preferably adapted to the size of the measurement nut. Typically, the depth is at least 1 mm, preferably at least 4 mm, but depths up to 20 mm may occur. The measurement recess may be utilized to protect a pattern, as described in more detail below.

As an alternative or a complement to using a measurement recess when performing the measurement, the measurement may be performed in a through-going measurement bore provided in the non-contact portion. Then, the measurement bore is provided at a top surface of the non-contact portion and, as an option, in addition at at least one side surface. The measurement bore may typically have a circular cross-section.

The measurement recess and/or measurement bore will weaken the mechanical strength of the non-contact portion, which helps to amplify the dimension change of the measurement nut when measured at the non-contact portion. In addition, the measurement recess and/or measurement bore may provide a suitable docking site for the sensor unit. Thereby, the docking can easily be made in a similar way for each measurement and with a high accuracy.

The dimension change may be determined by means of a sensor unit comprising a sensor from the group of a strain gauge, a capacitive sensor, a capacitance sensor, a heat-conductivity sensor, a piezo-resistive sensor, a piezo-capacitive sensor, a photodiode-based sensor, an ultrasonic sensor, a pressure sensor, an organic thin-film transistor sensor, an optical sensor, a 3D scanner, a ruler, a calliper, a micrometre, a feeler gauge or a combined sensor including at least one of these sensors. The sensor may be of the type commonly used for fingerprint detection, e.g. in smart phones. The sensor may be an array sensor, which may comprise a plurality of the sensors mentioned herein. The sensor unit forms part of a measurement system. The sensor unit is typically wiredly or wirelessly connected to an analysis unit. The sensor unit may also comprise a processor and/or a memory for storing measured data. The sensor unit may further comprise, indicator lamps and/or a display.

The sensor unit may be adapted to dock with the measurement nut. In particular, the sensor unit may be adapted to dock with the measurement recess and/or the measurement bore disclosed herein. Hence, the sensor unit may have an adequate size and shape to fit neatly within the measurement recess or the measurement bore.

The measurement may be performed by means of a pattern comprised in the non-contact portion or comprised in the object. The pattern may comprise a circle, a straight line or a dot pattern. The pattern may be located in a measurement recess of the measurement nut. In that case, the measurement recess will help to protect the pattern from being unintentionally damaged.

The pattern may be located on the surface of the non-contact portion or of the object. The pattern may also be protected, e.g. by a protective surface coating, such as a lacquering, or a protective cover. Anyway, the pattern is determinable from the outside of the non-contact portion or the object. Hence, the sensor unit is e.g. able to determine the pattern through the protective coating or cover, which e.g. may be electrically and/or thermally nonconductive. The protective coating or cover is thus selected to suitably function together with the sensor unit.

The pattern may be macroscopic, such that it is visible to a naked eye. Typically, the pattern may have a largest extension of at least 0.01 mm, preferably of at least 0.1 mm, more preferably of at least 1 mm, the largest extension being determined in a plane in which the pattern, or a projection of the pattern if not flat, extends. If the pattern comprises a circle, the largest extension is the diameter, which may be in the range of 3-10 mm, or 4-8 mm.

The pattern may be intrinsic or be provided on at least part of a surface of the non-contact portion of the measurement nut or on the object.

An intrinsic pattern exists on the non-contact portion without any extra treatment or application, e.g. a natural surface structure or a pattern integrally formed on at least part of the non-contact portion or on the object as a result of the manufacture of that component.

If provided, the pattern may be provided with the purpose of performing the measurement. Providing the pattern may include applying one or more patterns to the non-contact portion or object. The pattern may be e.g. applied to the non-contact portion or object by printing, laser gravure, mechanical gravure, etching, boring, milling, turning, sputtering or electrical discharge machining. The pattern may be an applied surface structure like knurling. As an alternative, the pattern may be provided on a separate film that is permanently or non-permanently attached to the non-contact portion or object, e.g. as a printed pattern on a plastic or metallic film, which is glued to the non-contact portion or object or attached by means of at least one mechanical fastener.

The pattern may be provided for another main purpose than determining tension, but anyway the pattern may be useful for the determining tension. Examples of such patterns are a QR code, a bar code or a print, e.g. a text or a number. Such a pattern may be applied to the non-contact portion or object by any of the methods mentioned herein.

Another example of a pattern, which is provided for another main purpose than determining tension, is when the object is provided with an external thread, which is detectable by the sensor unit docked with the measurement bore of the non-contact portion of the measurement nut.

The pattern may comprise a plurality of pattern elements. The pattern may be regular or irregular. A regular pattern is repetitive, i.e. the pattern repeats the pattern elements. An example would be a pattern comprising a plurality of dots, i.e. the dot being a repeating pattern element, with a pre-selected distance in between. The pattern may comprise a variety of different pattern elements. The term regular refers to when the pattern is in an untensioned state, corresponding to the non-contact portion being in an untensioned state.

The pattern element may have a predefined depth and/or a predefined height, e.g. the pattern element being a dent or a protrusion.

The pattern may comprise one or more grooves. It has been found beneficial to use a circular groove. If measuring at the top surface, the groove may be centred around the length axis. A plurality of concentric circular grooves may be used.

The pattern may be represented as different material properties, e.g. pattern elements being zones having different conductivity properties. In that case, the pattern may comprise dents being filled by an insulating material, while the rest of the pattern is conductive, i.e. insulating "islands" in a "sea" of conductive material, or vice versa.

The pattern can be used to obtain a reference for determining the dimension change of the measurement nut. The reference can then be made by determining the distance between the pattern elements in an untensioned state of the measurement nut. The reference may also be determined in a tensioned state of the measurement nut, in which force of a known magnitude and known direction of application has been applied to the measurement nut.

The pattern may comprise a code, which may be unique for the measurement nut, on which the pattern is located, giving the measurement nut a unique identity. The code may be readable by means of an encryption key, e.g. provided as an algorithm in an analysis unit comprised in the measurement system also comprising the measurement nut and the sensor unit. If knowing the identity of the measurement nut, further information of the measurement nut, e.g. about tension characteristics, may be linked to that particular measurement nut via the identity. The further information may be stored in a database, e.g. in the cloud.

The pattern may be formed with a known distance between the pattern elements in an untensioned state of the measurement nut, which may be utilized as a reference for the data analysis. Then it would not be necessary to store reference data for the purpose of determining dimension change. However, the storage of reference data may be of interest anyway, since it may show a difference over time for the measurement nut.

As an alternative or a complement, the pattern itself, as determined by the sensor unit, may be used as a reference for determining the distance between the pattern elements by using the fact that the induced tension operates in a certain direction mainly and therefore affects the distance between pattern elements mainly in a first direction and leaves the distances between pattern elements in a second direction, e.g. being perpendicular to the first direction, more or less unaffected, or by analysing the relationship between the pattern elements.

As yet an alternative or complement, reference information may be included in the pattern itself, e.g. as information points comprised in the pattern, e.g. having information about position of pattern element or distance between pattern elements when in an untensioned or in a tensioned state, in which force of a known magnitude and known direction of application has been applied to at least part of the measurement nut. As an alternative, or a complement, the pattern may comprise information about tension characteristics of that non-contact portion, i.e. information about the non-contact portion's reaction to a plurality of tensions.

The pattern may be located in the one or more measurement recesses described herein. Thereby, the risk of unintentionally damaging the pattern is reduced as compared to a non-contact portion without any measurement recess.

The method may comprise
- determining the pattern by the array sensor, e.g. an image acquisition device,
- using image analysis to derive dimension information from the pattern.

The array sensor is typically two-dimensional. The image analysis may then be used to determine if the object is subjected to a high, or even a too high, load, e.g. a torsion. It may further be determined if the load is centric or eccentric.

The non-contact portion of the measurement nut comprises at least one slot at least partly extending in the axial direction of the measurement nut, preferably 1-10 slots, more preferably 2-6 slots, most preferably 3-5 slots, the at least one slot being used to increase the dimension change of the non-contact portion being induced from the contact portion. Hence, the slot/s may be used to amplify the dimension change occurring in the contact portion of the measurement nut when measuring, thereby increasing the accuracy of the measurement.

The method may further comprise
- making a reference measurement at the non-contact portion in a state of known tension of the measurement nut, and
- using the reference measurement when determining the dimension change of the measurement nut.

The state of known tension of the measurement nut is preferably an untensioned state. This measurement may be performed by the manufacturer of the measurement nut. The reference measurement only has to be performed once. It may then be associated with a unique identity of a particular measurement nut, e.g. via the pattern as described herein. Hence, the measurement nut may be provided with an identification, such as an applied number, a bar code or a QR code.

As an alternative or a complement, the reference measurement may be performed in a state of known tension of the measurement nut being different from untensioned state, in which state force of a known magnitude and known direction of application has been applied to the measurement nut.

In some real measurement situations, the geometry is not ideal, e.g. due to misalignment of the measurement nut in relation to the object, e.g. the bolt, to which the measurement nut is attached. For example, the measurement nut and the object may have non-parallel axes or non-parallel surfaces. This can be due to dirt and/or paint on the surface. Other causes could be errors occurring during manufacturing and/or mounting of the measurement nut or the object. For a bolt joint application, this misalignment is sometimes called joint face angularity. As a consequence, the object and the measurement nut will be asymmetrically loaded giving rise to large local tensions. This problem may in the end be detrimental to the object and/or to the measurement nut, since large local tensions may influence the fatigue strength in a negative way.

Hence, if it is interesting to determine a possible misalignment or joint face angularity, the method may further comprise:
- determining a degree of asymmetrical change of the determined dimension change of the measurement nut.

This may for example be performed by calculations used in a mathematical curve fitting method, such as a least squares method, a method of moments or a method of maximum likelihood.

The degree of asymmetrical change is regarded in relation to an ideal measurement, e.g. assuming that surfaces are parallel and/or axes aligned. Thereby, a low degree of asymmetrical change is obtained when a measurement result of the tensioned state of the measurement situation has substantially the same general shape as that of an untensioned state, but at a somewhat smaller scale. Ideally, the measurement result of the tensioned state has the same general shape as that of the untensioned state, but at a somewhat smaller scale. However, if the measurement result of the tensioned state has another general shape, e.g. being skewed, then it is said to be asymmetrically changed. The difference between the two measurement results may be determined with a mathematical curve fitting method, such as a least squares method, a method of moments or a method of maximum likelihood. The comparison could also be made to a known measurement result of a known tension state or to a known nominal size of the pattern.

If the degree of asymmetrical change is high, this is a sign that the object is not properly mounted. This may be used in the method by setting a threshold level for an acceptable degree of asymmetrical change. If the determined degree of asymmetrical change is over the threshold level, the operator making e.g. a bolt joint application may be warned of the misalignment by the measurement system, e.g. by a warning system comprised in the measurement system. The operator may then unfasten the object, e.g. the bolt, and make some adjustments, e.g. adjusting a washer, before refastening the object.

In that case, the method may further comprise:
- comparing the determined degree of asymmetrical change to a preselectable threshold level,
   and the optional step of
- transmitting a warning, such as an audial, a visual and/or a haptic warning, when the determined degree of asymmetrical change exceeds the preselectable threshold level.

According to a second aspect of the present invention, there is provided a measurement nut according to claim 7 comprising a contact portion, adapted for attachment to an object, such as a bolt or a threaded rod, and a non-contact portion. The contact portion and the non-contact portion are located coaxially, but axially offset, in relation to each other. The measurement nut is provided with a measurement zone at the non-contact portion, the measurement zone being adapted for determining a dimension change of the measurement nut being attached to the object.

The measurement nut according to the invention may be used when performing the method disclosed herein. The measurement mentioned in the method is then performed at the measurement zone of the measurement nut. Accordingly, the details described herein for the method are applicable for the measurement nut as well. Further, advantages described herein in relation to the method are valid for the measurement nut as well and vice versa.

When the contact portion is attached to the object, i.e. in direct contact to the object, the non-contact portion remains without any direct contact to the object. Hence, the non-contact portion may change its dimension independently of the object. The non-contact portion may e.g. be axially offset from the object. As mentioned above, the contact portion of the measurement nut may be threaded. In that case, it is adapted to be attached to a threaded portion of the object.

The measurement zone is located at a top surface of the non-contact portion. As an alternative, not covered by the claimed invention, or as a complement, the measurement zone may be located at at least one side surface of the non-contact portion, such as at two or three side surfaces. Details and advantages of the different location are described in conjunction with the method above.

In an embodiment, not covered by the claimed invention, the contact portion of the measurement nut may comprise a threaded first part and a threaded second part, the non-contact portion being located between the threaded first part and the threaded second part of the contact portion. Hence, the measurement zone is located between the threaded first part and the threaded second part of the contact portion. Preferably, the measurement zone is located halfway between the threaded first part and the threaded second part of the contact portion. The threaded first part and the threaded second part are connected to each other via the non-contact portion. This may be beneficial when the object is a rod, for which the side portions are easily accessible from the side of the rod. In this case, the measurement nut will follow the axial movement of the rod when the rod is exposed to an external load, a movement which may be measured as a dimension change at the measurement zones.

The non-contact portion may comprise at least one bar, e.g. two or three bars, spanning between the threaded first part and the threaded second part. There may further be at least one side portion comprised in the non-contact portion, e.g. two or three side portions, having a respective side surface. The at least one side portion may be split, e.g. in the middle, by a slot of the kind described herein. The measurement zone may be located in the side portion, e.g. such that it is split by the slot.

In an alternative embodiment, not covered by the claimed invention,, the non-contact portion of the measurement nut may comprise a first part and a second part, the contact portion, which may be threaded, being located between the first part and the second part of the non-contact portion of the measurement nut. In that case, the measurement may be performed at either the first part or the second part or at both parts of the non-contact portion.

The non-contact portion of the measurement nut according to the invention may be non-threaded, since it is not intended to be in direct contact with the object. However, in some embodiments, it is easier during manufacturing of the measurement nut to provide both the contact portion and the non-contact portion with a thread, although the thread of the non-contact portion is not intended to be used.

The non-contact portion comprises at least one slot extending in the axial direction, preferably 1-10 slots, more preferably 2-6 slots, most preferably 3-5 slots. The slot/s may be used to amplify the dimension change occurring in the contact portion of the measurement nut, thereby increasing the accuracy of the measurement.

The at least one slot may extend in the axial direction at least 40% of an axial length of the non-contact portion, preferably at least 60%, more preferably at least 80%, most preferably at least 95%. It may extend over the full length of the non-contact portion.

The at least one slot may extend in the radial direction at least 80% of a radial extension of the non-contact portion, preferably at least 90%, more preferably at least 95%, most preferably 100%. Hence, the non-contact portion may be divided into sub-portions by the slots. If the non-contact portion comprises a central hollow bore, the radial extension of the slot is measured as the wall thickness.

The at least one slot typically has an open end. Alternatively, both ends may be open or both ends may be closed. A suitable width of the slot depends on the size of the measurement nut, but is typically within the range of 1-5 mm.

The non-contact portion may have an axial length in the range of 10-100 mm. The non-contact portion may have an axial length being in the range of 25%-3000% of an axial length of the contact portion, e.g. in the range of 50%-1000% or 50%-500% or 50%-250% or 75%-125%.

The measurement zone may comprise a measurement recess and/or a through-going measurement bore. Please see the description for the first aspect for details and advantages of the measurement recess and/or through-going measurement bore.

The measurement zone may comprise a pattern, the pattern being intrinsic or applied, e.g. a groove. The pattern may comprise a circle, a straight line or a dot pattern. The pattern may be located in the measurement recess. Please see the description of the method for further details and advantages of the pattern.

The measurement nut may be provided with a unique identification, which provides the measurement nut with a unique identity. Please see the description of the method for further details and advantages of the unique identity.

According to a third aspect of the present invention, there is provided a measurement system comprising the measurement nut as described herein, a sensor unit adapted to dock with the measurement nut to determine a dimension change of the non-contact portion of the measurement nut by measurement at or by means of the measurement zone, and an analysis unit adapted to determine a dimension change of the measurement nut from the determined dimension change of the non-contact portion. The sensor unit and the analysis unit may be combined into a single unit.

The measurement system according to the invention may be used when performing the method disclosed herein. Accordingly, the details described herein for the method are applicable for the measurement system as well. Further, advantages described herein in relation to the method are valid for the measurement system as well, and vice versa.

The sensor unit may comprise a sensor from the group of a strain gauge, a capacitive sensor, a capacitance sensor, a heat-conductivity sensor, a piezo-resistive sensor, a piezo-capacitive sensor, a photodiode-based sensor, an ultrasonic sensor, a pressure sensor, an organic thin-film transistor sensor, an optical sensor, a 3D scanner, a ruler, a calliper, a micrometre, a feeler gauge or a combined sensor including at least one of these sensors. The sensor may be of the type commonly used for fingerprint detection, e.g. in smart phones. The sensor may be an array sensor, which may comprise a plurality of the sensors mentioned herein. Since the non-contact portion amplifies the dimension change of the measurement nut, the requirements on the sensor could be lower than in prior art measurement systems. Alternatively, the amplification of the dimension change may be used to increase the accuracy of the measurement.

The sensor unit may comprise an array sensor, e.g.an image acquisition device, and wherein the analysis unit is adapted for image analysis. The array sensor is typically two-dimensional. The image analysis may then be used to determine if the object is subjected to a high, or even a too high, torsion. It may be determined if the load is centric or eccentric.

In a measurement system, in which the measurement nut comprises a through-going measurement bore, the sensor unit may be adapted to dock with the through-going measurement bore. Hence, the sensor unit may have an adequate size and shape to fit neatly within the measurement bore. This is suitable in order to use a pattern located at the object for the measurement.

The analysis unit of the measurement system may be adapted to determine a degree of asymmetrical change of the determined dimension change of the measurement nut. This may for example be performed by calculations used in a mathematical curve fitting method, e.g. a least squares method, a method of moments or a method of maximum likelihood.

The analysis unit of the measurement system may be adapted to compare the degree of asymmetrical change to a preselectable threshold level.

The measurement system may further comprise a warning system, which is adapted to transmit a warning, such as an audial, a visual and/or a haptic warning. The warning is issues in case the degree of asymmetrical change exceeds the preselectable threshold level.

If the degree of asymmetrical change is high, this is a sign that the object is not properly mounted. Hence, if the determined degree of asymmetrical change is over the threshold level, the operator making the bolt joint application may be warned of the misalignment by the measurement system, e.g. by the warning system comprised in the measurement system. The operator may then unfasten the object and make some adjustments, e.g. adjusting a washer, before refastening the object.

### BRIEF DESCRIPTION OF THE DRAWINGS

The present invention will hereinafter be further explained by means of non-limiting examples with reference to the appended drawings wherein:
Fig. 1a-e illustrate a measurement nut according to a first embodiment of the invention.
Fig. 2 illustrates a measurement system according to an embodiment of the invention.
Fig. 3 illustrates a method of determining a dimension change of a measurement nut according to an embodiment of the invention.
Fig. 4a shows an exemplary pattern.
Fig. 4b shows a representation of the measurement result.
Fig. 5a-d illustrate a measurement nut not covered by the claimed invention.
Fig. 6a-c illustrate a measurement nut not covered by the claimed invention.
Fig. 7 illustrates a measurement nut not covered by the claimed invention.
Fig. 8a-b illustrate a measurement nut not covered by the claimed invention.
Fig. 9a shows a representation of a measurement result for a bolt joint application in an aligned measurement situation.
Fig. 9b shows a representation of a measurement result for a bolt joint application in a non-aligned measurement situation.
Fig. 9c shows a side view of the bolt joint application measured in Fig. 9a.
Fig. 9d shows a sectional view of the bolt joint application measured in Fig. 9a.
Fig. 9e shows a side view of the bolt joint application measured in Fig. 9b.
Fig. 9f shows a sectional view of the bolt joint application measured in Fig. 9b.
Fig. 10a illustrates a threaded rod provided with a measurement zone.
Fig. 10b illustrates a flange provided with measurement zones.

It should be noted that the appended drawings are not necessarily drawn to scale and that the dimensions of some features of the present invention may have been exaggerated for the sake of clarity.

### DETAILED DESCRIPTION

The invention will in the following be exemplified by embodiments. It should however be realized that the embodiments are included in order to explain principles of the invention and not to limit the scope of the invention, defined by the appended claims. Details from two or more of the embodiments may be combined with each other.

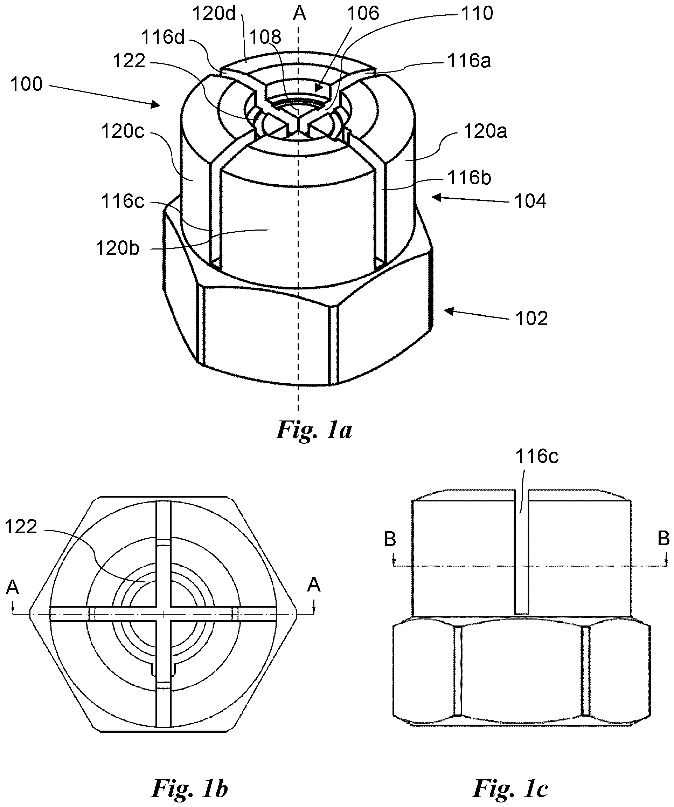

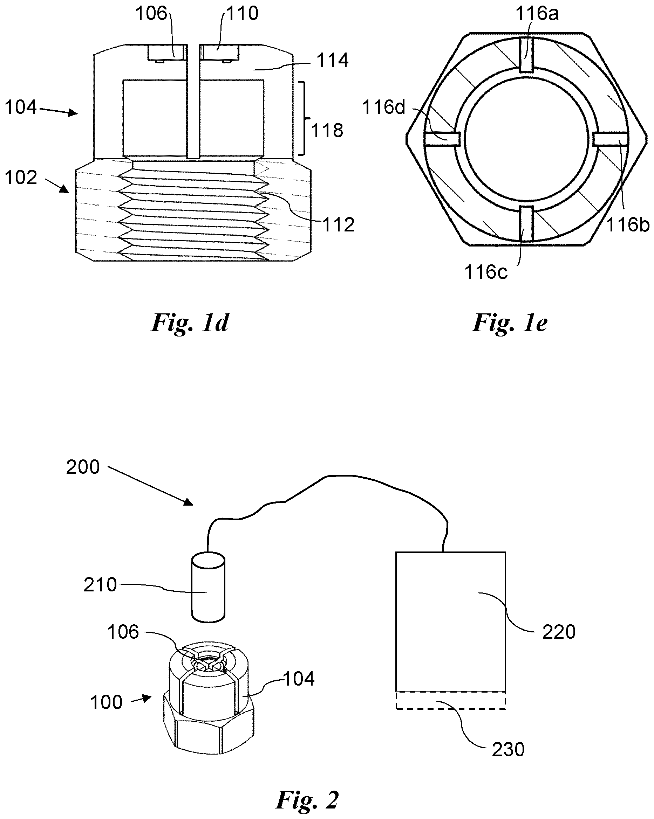

Fig. 1a-e illustrate a measurement nut 100 according to a first embodiment of the invention. Fig. 1a shows a perspective view, Fig. 1b shows a top view, Fig. 1c shows a side view, Fig. 1d shows a sectional view taken along the line A-A in Fig. 1b and Fig. 1e shows a sectional view taken along the line B-B in Fig. 1c.

The measurement nut 100 comprises a threaded contact portion 102, adapted for attachment to an object, not illustrated, and a non-contact portion 104. The object is typically a mechanical component, e.g. a bolt or a threaded rod or any other mechanical component.

The measurement nut 100 has an axial direction with a length axis A. The contact portion 102 and the non-contact portion 104 are located coaxially, i.e. around the same length axis A, but axially offset in relation to each other with the non-contact portion 104 being on top of the contact portion 102 in the illustrated perspective. The measurement nut 100 is provided with a measurement zone 106 at a top surface 108 of the non-contact portion 104. The measurement zone 106, which in the illustrated embodiment comprises a measurement recess 110, is adapted for determining a dimension change of the measurement nut 100 when being attached to the object.

The dimension change of the measurement nut 100 is caused by a tension, to which the measurement nut 100 is exposed, which tension in turn is a result of an external load being applied to the object. Expressed the other way around: when the object is exposed to the external load, the external load induces a tension in the object and thus also induces a tension in the measurement nut 100 via the contact portion 102, which is in direct contact with the object. Hence, the external load will cause a dimension change of the contact portion 102 but also of the non-contact portion 104. By measuring at the non-contact portion 104 of the measurement nut 100, instead of at the contact portion 102 of the measurement nut 100, the non-contact portion 104 may be used to amplify the dimension change of the contact portion 102. Experiments have shown that an amplification up to 10-25 times is possible. Consequently, the dimension change of the measurement nut 100, and thus indirectly the tension of the object, may be measured with a higher accuracy as compared to prior art solutions measuring at a contact portion of a measurement nut or at the object itself.

The measurement nut 100 forms part of a measurement system 200 as is illustrated in Fig. 2. The measurement system 200 further comprises a sensor unit 210, adapted to dock with the measurement nut 100 to determine a dimension change of the non-contact portion 104 of the measurement nut 100 by measurement at the measurement zone 106, and an analysis unit 220, adapted to determine a dimension change of the measurement nut 100 from the determined dimension change at the non-contact portion 104.

The sensor unit 210 may comprise a sensor from the group of a strain gauge, a capacitive sensor, a capacitance sensor, a heat-conductivity sensor, a piezo-resistive sensor, a piezo-capacitive sensor, a photodiode-based sensor, an ultrasonic sensor, a pressure sensor, an organic thin-film transistor sensor, an optical sensor, a 3D scanner, a ruler, a calliper, a micrometre, a feeler gauge or a combined sensor including at least one of these sensors. The sensor may be of the type commonly used for fingerprint detection, e.g. in smart phones. The sensor may be an array sensor, which may comprise a plurality of the sensors mentioned herein.

As is best seen in Fig. 1d, the contact portion 102 is internally threaded. The internal thread 112 is intended to be attached to a corresponding external thread of the object to be measured. In the illustrated embodiment, the non-contact portion 104 is non-threaded. It is intended not to be in direct contact to the object. However, sometimes it is easier during manufacturing of the measurement nut 100 to provide both the contact portion 102 and the non-contact portion 104 with a thread, although the thread of the non-contact portion 104, in that case, is not intended to be used for attachment.

In the illustrated first embodiment, the measurement nut 100 is a capped nut comprising a capping part 114, which forms a cap of the non-contact portion 104. This is best seen in Fig. 1d. The measurement zone 106 with its measurement recess 110 is located in the capping part 114.

The measurement nut 100 is provided with four slots 116a-d, evenly distributed around the circumference of the non-contact portion 104. In the illustrated embodiment, the slots 116a-d extend axially through the whole axial length of the non-contact portion 104, see Figs. 1a and 1c, and have an open end facing upwards. The slots 116a-d extend radially through the non-contact portion 104, see Figs. 1a, 1b and 1e. In the capping part 114, the slots 116a-d extend through the full radius. In a lower part 118 of the non-contact portion 104, i.e. below the capping part 114, the slots 116a-d extend through the whole wall thickness. Accordingly, the slots 116a-d divide the non-contact portion 104 into four sub-portions 120a-d. The slots 116a-d are used to amplify the dimension change of the contact portion 102 when measuring at the measurement zone 106.

The measurement zone 106, to which the sensor unit 210 is intended to be docked, is provided with a pattern in the form of a circular groove 122, best seen in Fig. 1a and 1b. The circular groove 122 is centred around the length axis A. It is located in the measurement recess 110.

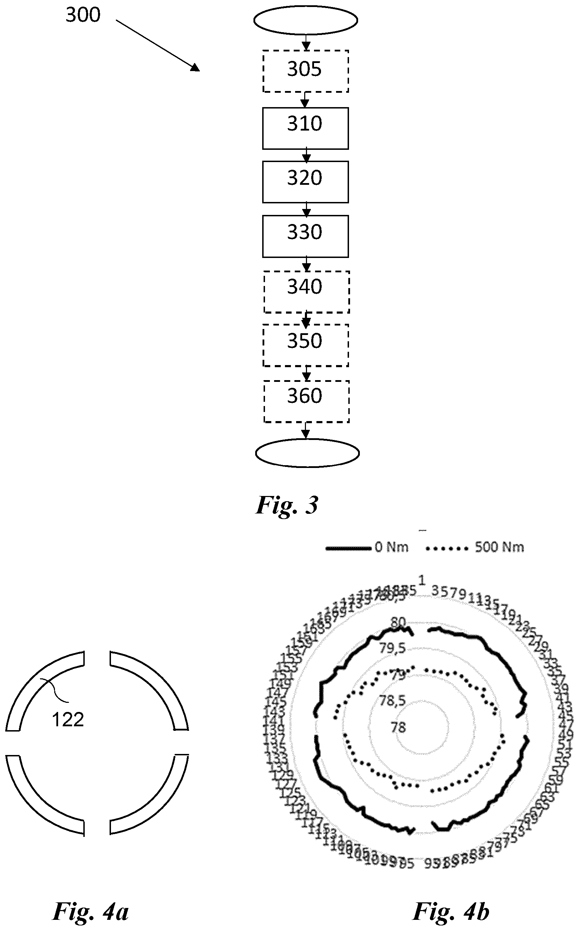

Fig. 3 illustrates a method 300 of determining a dimension change of the measurement nut 100 according to an embodiment of the invention. The method 300 comprises:
310: Attaching at least part of the contact portion 102 to the object, the non-contact portion 104 being without direct contact to the object,
320: Exposing the object to an external load, thereby causing a dimension change of the contact portion 102 of the measurement nut 100, and
330: Determining the dimension change of the measurement nut 100 by measurement at the non-contact portion 104.

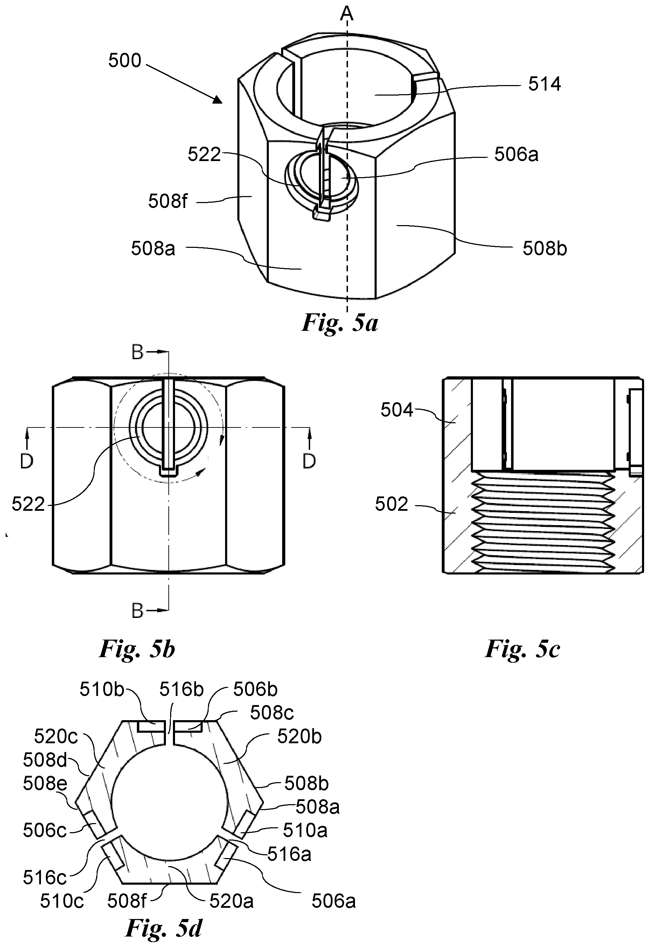

The measurement may be performed with the measurement system 200 illustrated in Fig. 2. When using a measurement nut 100 like the one of Fig. 1a-e, the measurement is performed at the top surface 108 of the measurement nut 100. Thereby the sensor unit 210 is docked with the measurement recess 110 forming the measurement zone 106. In other embodiments, see e.g. the embodiments of Figs. 5a-d, Figs. 6a-c, Fig. 7 and Figs. 8a-b described below, the measurement is instead performed at one or more side surfaces of the measurement nut 500, 600, 700, 800.

The sensor unit 210 may comprise an array sensor, e.g. an image acquisition device. The array sensor is typically two-dimensional with the analysis unit 220 being adapted for image analysis.

The method 300 may further comprise the optional step of
305: Making a reference measurement at the non-contact portion 104 in a state of known tension of the measurement nut 100.

In that case, the reference measurement may be used when determining the dimension change of the measurement nut 100 in step 330.

The state of known tension of the measurement nut 100 is preferably an untensioned state. As an alternative or a complement, the reference measurement may be performed in a state of known tension of the measurement nut 100 being different from the untensioned state, in which state force of a known magnitude and known direction of application has been applied to the measurement nut 100.

If omitting step 305, known information about the pattern may be used, e.g. a nominal radius of the circular groove 122 of the measurement nut 100 of Figs 1a-e.

Fig. 4a shows an exemplary pattern, illustrated as the circular groove 122 of the measurement nut 100 of Fig. 1a-e. Fig. 4b shows an exemplary representation of the measured data. The full line shows a measurement result of the circular groove 122 in an untensioned state, i.e. 0 Nm. The scale is given in pixel units of the image acquisition device with 1 pixel being 0.05 mm. Hence, the radius is about 4 mm for the circular groove 122 of the untensioned measurement nut 100 of the exemplary embodiment.

When the contact portion 102 of the measurement nut 100 is tensioned, due to the thread 112 being in contact to the object stretching the contact portion 102, the radius of the circular groove 122 located in the non-contact portion 104 will decrease, as is illustrated by the dotted measurement result in Fig.4b representing an applied torque of 500 Nm inducing tension to the object and thus to the measurement nut 100. By comparing the dotted 500 Nm measurement result to the full line of the measurement result of the untensioned state, the dimension change of the non-contact portion 104 can be measured and thus the dimension change of the measurement nut 100 can be determined. The tension of the object can thereafter be derived from the measured dimension change.

Fig. 5a-d show another measurement nut 500 not covered by the claimed invention. Fig. 5a shows a perspective view, Fig. 5b shows a side view, Fig. 5c shows a sectional view taken along the line B-B in Fig. 5b and Fig. 5d shows a sectional view taken along the line D-D in Fig. 5b.

The measurement nut 500 has a hexagonal cross-section and comprises six side surfaces 508a-f. It comprises a threaded contact portion 502 and a non-threaded non-contact portion 504. It has a through-going bore 514.

The measurement nut 500 has three measurement zones 506a, 506b, 506c located at a respective side surface 508a, 508c, 508e being 120 degrees apart. Each measurement zone 506a-c comprises a measurement recess 510a, 510b, 510c. The measurement zones 506a-c comprises a pattern formed by a circular groove 522.

The measurement nut 500 is provided with three slots 516a, 516b, 516c which extend through the full axial length of the non-contact portion 504. They also extend through the full wall thickness of the non-contact portion 504. Hence, they divide the non-contact portion 504 into three sub-portions 520a-c. Further, the slots 516a-c extend through the respective measurement zones 506a-c dividing them into halves and splitting the circular groove 522 into two semi-circles.

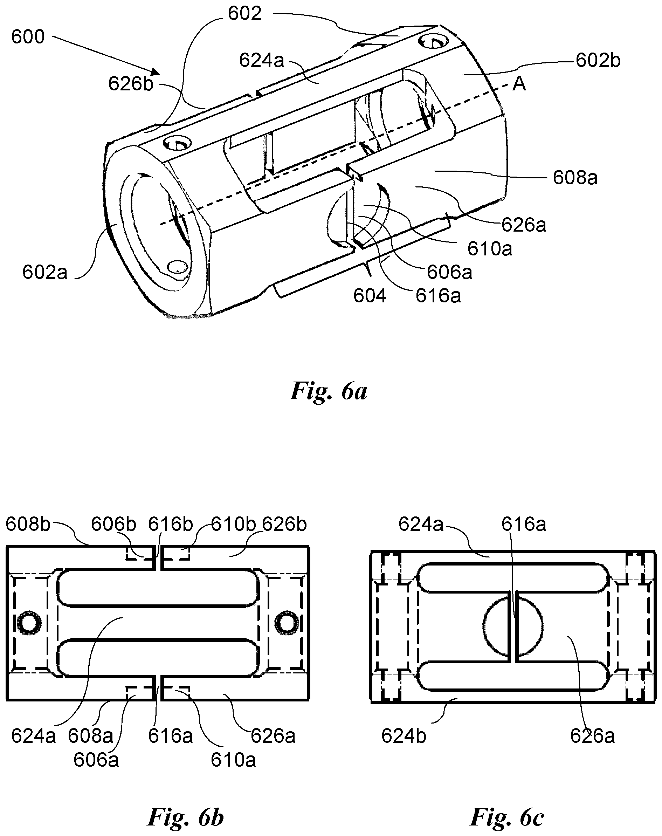

Fig. 6a-c show yet another measurement nut 600 not covered by the claimed invention, the measurement nut 600 being adapted to be attached to a e.g. a threaded rod. Fig. 6a shows a perspective view, Fig. 6b shows a side view and Fig. 6c shows another side view, taken 90 degrees away from the side view of Fig. 6b.

The contact portion 602 of this measurement nut 600 comprises a threaded first part 602a and a threaded second part 602b, the non-contact portion 604 being located between the threaded first part 602a and the threaded second part 602b of the contact portion 602. (The thread is not illustrated in Fig. 6a). The axial length of the contact portion 602 is the sum of the axial lengths of the threaded first part 602a and the threaded second part 602b. The threaded first part 602a and the threaded second part 602b are connected to each other via the non-contact portion 604. The non-contact portion 604 comprises two bars 624a, 624b spanning between the threaded first part 602a and the threaded second part 602b. The non-contact portion 604 further comprises two side portions 626a, 626b having a respective side surface 608a, 608b. The side portions 626a-b are split in the middle by a respective slot 616a, 616b. Hence, the slots 616a-b are open at both ends.

There are two measurement zones 606a, 606b each comprising a measurement recess 610a, 610b. They are located in the side portions 626a, 626b between the threaded first part 602a and the threaded second part 602b, in the illustrated embodiment halfway between the threaded first part 602a and the threaded second part 602b. The location at the side portions 626a, 626b makes the measurement zones 606a-b accessible from the side of the rod. The measurement nut 600 will follow the axial movement of the rod when the rod is exposed to an external load, a movement which may be measured as a dimension change at the measurement zones 606a, 606b. The measurement zones 606a, 606b may comprise a pattern, not illustrated, e.g. similar to the circular grooves 122, 522 of the embodiment of Fig. 1a-e and Fig. 5a-d.

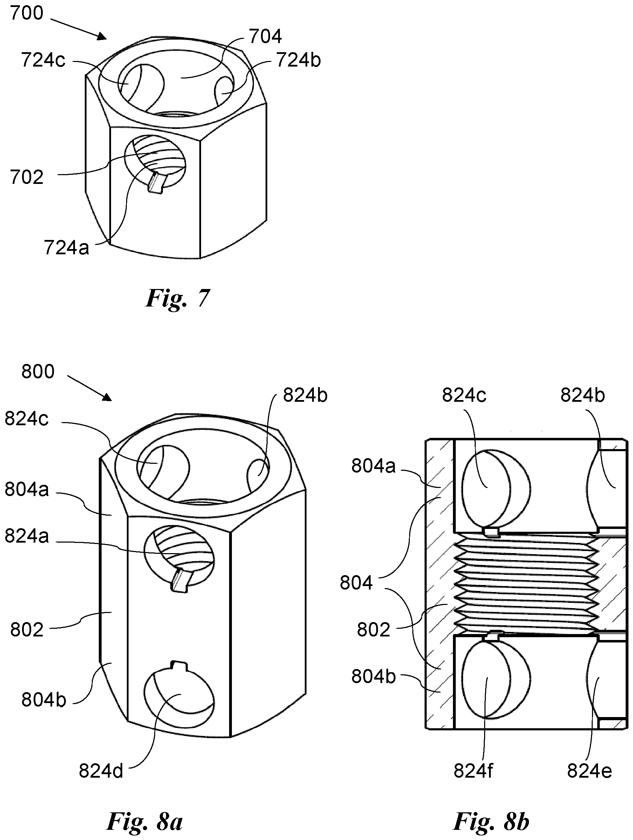

A measurement nut 700 illustrated in Fig. 7, not covered by the claimed invention, has many features in common with the measurement nut, not covered by the claimed invention, shown in Fig. 5a-d. It comprises a threaded contact portion 702 and a non-contact portion 704. Instead of having measurement zones being formed by measurement recesses 510a-c like in the second embodiment, the non-contact portion 704 is provided with measurement zones being formed by three through-going measurement bores 724a-c. These are used as docking sites for the sensor unit 210 of the measurement system 200. When the sensor unit 210 is docked in one of the measurement bores 724a-c, the sensor unit 210 follows the displacement of the non-contact portion 704, which displacement in turn is caused by the object being tensioned. Since the bore 724a-c is through-going, the sensor unit 210 can use a pattern provided on the object in order to determine the dimension change of the measurement nut 700. The pattern on the object may be a thread, in case the object comprises an external thread, or the object may be deliberately provided with a pattern, such as a QR code, a bar code or a dot pattern, which is detectable through the bore 724a-c. The bore 724a-c may be provided at at least one side surface, illustrated at three side surfaces in Fig. 7, preferably evenly distributed around the circumference. It would also be possible to have measurement recesses, e.g. like the ones described for the first to third embodiment.

Fig. 8a-b show yet another measurement nut 800 not covered by the claimed invention. Fig. 8a shows a perspective view, and Fig. 8b shows a sectional view.

The measurement nut 800 comprises a threaded contact portion 802 and a non-contact portion 804, which is unthreaded. The non-contact portion 804 comprises a first part 804a and a second part 804b, the contact portion 802 being located between the first part 804a and the second part 804b of the non-contact portion 804. The axial length of the non-contact portion 804 is the sum of the axial lengths of the first part 804a and the second part 804b.

The non-contact portion 804 is provided with measurement zones in the form of through-going measurement bores 824a-f, located at the side surfaces. Alternatively, measurement recesses, e.g. like the ones described for the first to third embodiment may be provided. In the illustrated embodiment, there are three measurement bores 824a-c in the first part 804a and three measurement bores 824d-f in the second part 804b. For comments to the location at the side surface, please see the comments to the second, third and fourth embodiments. For comments to the measurement bores 824a-f, please see the comments to the fourth embodiment.

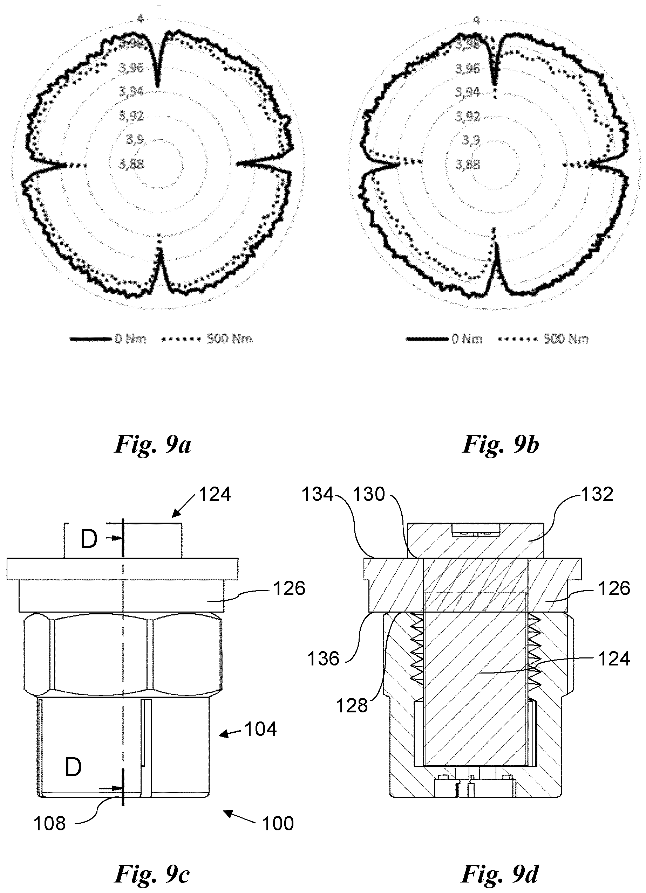

Figs. 9a and 9b show two further examples of measurements made for a pattern comprising a circular groove 122 like the one of the measurement nut 100 of Figs. 1a-e, also illustrated in Fig. 4a. The full-line measurement results of Figs. 9a and 9b, respectively, show the measurement result of the circular groove 122 in the untensioned state, i.e. at 0 Nm. The radius is then about 4 mm, as may be gleaned on the y-scale. The measurement nuts 100, whose patterns are illustrated in Figs. 9a and 9b, are supposed to cooperate with an object, such as e.g. a bolt 124 or a threaded rod, illustrated as bolt joint applications in Figs. 9c-9f.

Similar as for the example in Fig. 4b, the radius of the circular groove 122 located in the non-contact portion 104 will decrease when the contact portion 102 of the measurement nut 100 is tensioned. This is illustrated by the dotted measurement results in Figs. 9a and 9b representing an applied torque of 500 Nm inducing tension to the object and thus to the measurement nut. By comparing the dotted measurement result of 500 Nm to the full-line measurement result of the untensioned state, the dimension change of the non-contact portion can be measured and, thus the dimension change of the measurement nut 100 can be determined. The tension of the object can thereafter be derived from the measured dimension change. The low values of the measurement result at about 0°, 90°, 180° and 270° correspond to the four slots 116a-d provided in measurement nut 100, see Figs. 1a-e.

Fig. 9a illustrates a measurement example, for which the 0 Nm and the 500 Nm measurement results are substantially symmetrical, i.e. the 500 Nm measurement result has the same general shape but a somewhat smaller radius, illustrating an ideal measurement situation. This is the desired measurement situation, illustrated in Figs. 9c-f, with Fig. 9c showing a side view and Fig. 9d showing a sectional view along the line D-D of Fig. 9c. Please note that the measurement nut 100 is located upside down as compared to Figs. 1a-e, such that the top surface 108 of the non-contact portion 104 is facing downwards. A washer 126 is held between an end surface 128 of the contact portion 102 and a lower surface 130 of a head 132 of the bolt 124. In this example, an upper surface 134 and a lower surface 136 of the washer 126 are parallel to each other. Accordingly, the bolt 124 is located in a straight and aligned way in relation to the measurement nut 100. Hence, the 500 Nm measurement result is located inside the 0 Nm measurement result over the whole circumference, as is seen in Fig. 9a.

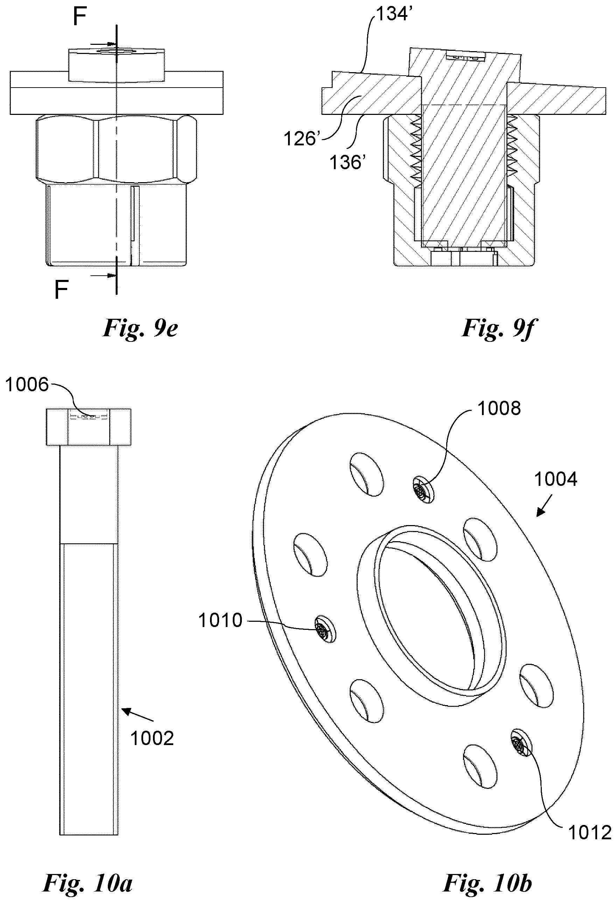

However, sometimes in real situations, the upper surface 134' and the lower surface 136' of the washer 126' are not parallel to each other, as illustrated in Figs. 9e-f, with Fig. 9e showing a side view and Fig. 9f showing a sectional view along the line F-F of Fig. 9e. This can be due to dirt and/or paint on the surface. Other causes could be errors occurring during manufacturing and/or mounting of the bolt 124' or the washer 126'. This misalignment of the bolt joint application is sometimes called joint face angularity. As a consequence, the bolt 124' and the measurement nut 100 will be asymmetrically loaded giving rise to large local tensions. This problem may in the end be detrimental to the bolt joint application, since large local tensions may influence the fatigue strength in a negative way.

Such a real measurement situation is illustrated in Fig. 9b showing that the 500 Nm measurement result is asymmetrical. From about 0° to about 90°, and from about 180° to about 270°, the 500 Nm measurement result is inside the 0 Nm measurement result, however, with a larger difference between the two measurement results than in the ideal situation of Fig. 9a. From about 90° to about 180°, and from about 270° to about 360°, the 0 Nm and the 500 Nm measurement results are almost on top of each other.

The degree of asymmetrical change may be quantified in order to detect the degree of misalignment also called joint face angularity when occurring in a bolt joint application. The degree of asymmetrical change is regarded in relation to an ideal result, e.g. assuming that surfaces are parallel. Thereby, a low degree of asymmetrical change is obtained when the measurement result of the tensioned state has substantially the same general shape as that of the untensioned state, but at a somewhat smaller scale like in Fig. 9a. Ideally, the measurement result of the tensioned state has the same general shape as that of the untensioned state, but at a somewhat smaller scale. However, if the measurement result of the tensioned state has another general shape, e.g. being skewed as illustrated in Fig. 9b, then it is said to be asymmetrically changed.

Purely as an example, for the measurements performed in Figs. 9a and 9b, illustrated at 500 Nm applied torque, the measurement result determined in a tensioned state may be compared to an untensioned measurement result or to the nominal radius of the circular groove 122. Thereby, the difference between the two measurement results may be determined with a mathematical curve fitting method, such as a least squares method, a method of moments or a method of maximum likelihood. For the measurement results of Fig. 9a and 9b, 960 radii were determined equidistantly around the circumference of the circular groove 122 and the standard deviation was used to quantify the difference to the 0 Nm measurement result, which data had first been determined and stored for comparison.

If the degree of asymmetrical change is high, this is a sign that the bolt joint application is not properly mounted. This may be used in the method 300 of determining a dimension change of the measurement nut 100 by setting a threshold level for an acceptable degree of asymmetrical change. If the determined degree of asymmetrical change is over the threshold level, the operator making the bolt joint application may be warned of the misalignment by the measurement system 200, e.g. by a warning system 230 comprised in the measurement system 200, see Fig. 2. The operator may then unfasten the bolt joint application and make some adjustments, e.g. adjusting a washer, before remaking the bolt joint application.

Hence, if it is interesting to determine misalignment or joint face angularity, the method 300 described herein, see Fig. 3, may further comprise the optional step of:
340: Determining the degree of asymmetrical change of the determined dimension change.

In addition, the method 300 may comprise the steps of:
350: Comparing the determined degree of asymmetrical change to a preselactable threshold level, and
360: Transmitting a warning if the determined degree of asymmetrical change exceeds the preselectable threshold level.

The warning may be audial, visual and/or haptic. It may be transmitted by the warning system 230 comprised in the measurement system 200, see Fig. 2, e.g. located together with the analysis unit 220 as a single unitary unit. There may e.g. be a beep, a light may change colour and/or flash, or a tool used for tensioning the measurement nut 100 may vibrate. Hence the warning system 230 may comprise one or more LEDs and/or a loudspeaker.

Even if the measurement of misalignment, or joint face angularity, has been exemplified above by a pattern in the form of the circular groove 122, it would also be possible to use other patterns, e.g. like the other patterns described herein. The measurement nut may further be of any of the types described herein.

Furthermore, corresponding measurements in order to detect misalignment or joint face angularity can be made for other kinds of connections, e.g. a screw connection. The measurement of misalignment or joint face angularity may be performed by means of the measurement nut 100, as is illustrated, but may also be performed at e.g. a bolt, a screw, a threaded rod, a washer or a spacer.

Moreover, it may be relevant to measure the degree of asymmetrical change for any element, in which a dimensional change may occur, e.g. caused by an external load. Examples of such elements are a bolt, a screw, a threaded rod 1002, see Fig. 10a, a washer, a spacer or a flange 1004, see Fig. 10b. The external load applied to the element may be a pull force, a pressing force, a pressure, a shearing force, a torsional force, a bending force, gravity, a force caused by a temperature difference or any combination of such forces. Such forces are known to induce tension in the element, which may be determined with a method corresponding to the method of determining a dimension change of a measurement nut as described herein and/or by means of the measurement system 200 as described herein. The measurement may thereby reveal a degree of asymmetrical change when determining the dimension change, which indicates some kind of misalignment or irregularity of the element being measured. The degree of asymmetrical change may thereby be detected directly in the element, e.g. in the threaded rod 1002 or in the flange 1004, by arranging one or more measurement zones 1006; 1008, 1010, 1012 in the element 1002, 1004, or by means of a separate component attached to the element, like the measurement nut described herein.

A method for measuring the degree of asymmetrical change of an element may comprise:
- determining the dimension change of the element 1002, 1004 by measurement at a measurement zone 1006; 1008, 1010, 1012 provided in the element,
- determining the degree of asymmetrical change from the determined dimension change. The element may e.g. be a nut, a measurement nut, a bolt, a screw, a threaded rod, a washer, a spacer or a flange.

The step of determining the degree of asymmetrical change may for example be performed by calculations used in a mathematical curve fitting method, such as a least squares method, a method of moments or a method of maximum likelihood.

The dimension change may be deliberately caused by a preceding optional step included in the method for measuring the degree of asymmetrical change of an element:
- exposing the element to an external load, thereby causing a dimension change of the element.

In addition, the method for measuring the degree of asymmetrical change of an element may comprise the steps of:
- comparing the determined degree of asymmetrical change to a preselactable threshold level,
- transmitting a warning if the determined degree of asymmetrical change exceeds the preselectable threshold level.

The method for measuring the degree of asymmetrical change of an element may further comprise
- determining a pattern comprised in the measurement zone by an array sensor, e.g. an image acquisition device, and
- using image analysis to derive dimension information from the pattern.

The method for measuring the degree of asymmetrical change of an element may further comprise
- making a reference measurement in a state of known tension of the element, and
- using the reference measurement when determining the dimension change of the element.

The details given for the method of determining a dimension change of a measurement nut described herein, for the measurement nut described herein and for the measurement system described herein are relevant also for method for measuring the degree of asymmetrical change of an element, as fa as they are applicable.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. A method of determining a dimension change of a measurement nut (100), the measurement nut (100) comprising a contact portion (102), adapted for attachment to an object, such as a bolt or a threaded rod, and a non-contact portion (104), the contact portion (102) and the non-contact portion (104) being located coaxially, but axially offset, in relation to each other, the measurement nut (100) being provided with a measurement zone (106) located at a top surface (108) of the non-contact portion (104),
the method comprising
- attaching (310) at least part of the contact portion (102) to the object, the non-contact portion (104) being without direct contact to the object,
- exposing (320) the object to an external load, thereby causing a dimension change of the contact portion (102), and
- determining the dimension change (330) of the measurement nut (100) by measurement performed at the measurement zone (106) of the non-contact portion (104),
the method **characterised in that** the non-contact portion (104) of the measurement nut (100) comprises at least one slot (116a-d) at least partly extending in an axial direction (A) of the measurement nut (100), preferably 1-10 slots, more preferably 2-6 slots, most preferably 3-5 slots, the at least one slot (116a-d) being used to increase the dimension change of the non-contact portion (104) being induced from the contact portion (102).

2. The method according to claim 1, wherein the measurement nut (100) is a capped nut comprising a capping part (114), which is comprised in the non-contact portion (104) of the measurement nut (100).

3. The method according to claim 1 or 2, wherein the measurement is performed in a measurement recess (110) provided at the top surface (108) of the non-contact portion (104), preferably the measurement recess (110) having a depth in the range of 1 to 4 mm, and/or the measurement is performed at or around a length axis of the measurement nut (100).

4. The method according to any one of the preceding claims, wherein the dimension change is determined by means of a sensor unit (210) comprising a sensor from the group of a strain gauge, a capacitive sensor, a capacitance sensor, a heat-conductivity sensor, a piezo-resistive sensor, a piezo-capacitive sensor, a photodiode-based sensor, an ultrasonic sensor, a pressure sensor, an organic thin-film transistor sensor, an optical sensor, a 3D scanner, a ruler, a calliper, a micrometre, a feeler gauge or a combined sensor including at least one of these sensors, the sensor e.g. being an array sensor.

5. The method according to any one of the preceding claims, wherein the measurement is performed by means of a pattern comprised in the non-contact portion (104) or comprised in the object, the pattern being intrinsic or provided, e.g. a groove (122), and wherein the method comprises
- determining the pattern by an array sensor, e.g. an image acquisition device,
- using image analysis to derive dimension information from the pattern.

6. The method according to any one of the preceding claims, wherein the method further comprises
- determining (340) a degree of asymmetrical change of the determined dimension change of the measurement nut (100), e.g. by means of a mathematical curve fitting method, such as a least squares method, a method of moments or a method of maximum likelihood, and
wherein the method preferably further comprises
- comparing (350) the determined degree of asymmetrical change to a preselectable threshold level,
and the optional step of
- transmitting (360) a warning, such as an audial, a visual and/or a haptic warning, when the determined degree of asymmetrical change exceeds the preselectable threshold level.

7. A measurement nut (100) comprising
- a contact portion (102), adapted for attachment to an object, such as a bolt or a threaded rod, and
- a non-contact portion (104),
the contact portion (102) and the non-contact portion (104) being located coaxially, but axially offset, in relation to each other, wherein
the measurement nut (100) is provided with a measurement zone (106) located at a top surface (108) of the non-contact portion (104), the measurement zone (106) being adapted for performing a measurement at the measurement zone (106) by determining a dimension change of the measurement nut (100) being attached to the object,
the measurement nut **characterised in that** the non-contact portion (104) comprises at least one slot (116a-d) extending in an axial direction (A) of the measurement nut (100), preferably 1-10 slots, more preferably 2-6 slots, most preferably 3-5 slots.

8. The measurement nut (100) according to claim 7, wherein the measurement nut (100) is a capped nut comprising a capping part (114), which is comprised in the non-contact portion (104) of the measurement nut (100).

9. The measurement nut (100) according to any one of claims 7-8, wherein the non-contact portion (104) is non-threaded.

10. The measurement nut (100) according to any one of claims 7-9, wherein the measurement zone (106) comprises a measurement recess (110), preferably the measurement recess (110) having a depth in the range of 1 to 4 mm.

11. The measurement nut (100, 500, 600) according to any one of claims 7-10, wherein the measurement zone (106; 506a-c; 606a, 606b) comprises a pattern, the pattern being intrinsic or applied, e.g. a groove (122, 522), the pattern e.g. comprising a circle (122, 522), a straight line or a dot pattern.

12. A measurement system (200) comprising
- the measurement nut (100) according to any one of claims 7-11,
- a sensor unit (210) adapted to dock with the measurement nut (100,) to determine a dimension change of the non-contact portion (104) of the measurement nut (100) by measurement at or by means of the measurement zone (106), and
- an analysis unit (220) adapted to determine a dimension change of the measurement nut (100) from the determined dimension change of the non-contact portion (104).

13. The measurement system (200) according to claim 12, wherein the sensor unit (210) comprises a sensor from the group of a strain gauge, a capacitive sensor, a capacitance sensor, a heat-conductivity sensor, a piezo-resistive sensor, a piezo-capacitive sensor, a photodiode-based sensor, an ultrasonic sensor, a pressure sensor, an organic thin-film transistor sensor, an optical sensor, a 3D scanner, a ruler, a calliper, a micrometre, a feeler gauge or a combined sensor including at least one of these sensors, the sensor e.g. being an array sensor,
preferably the sensor unit (210) comprising an array sensor, e.g. comprising an image acquisition device and the analysis unit (220) being adapted for image analysis.

14. The measurement system (200) according to any one of claims 12-13, wherein the analysis unit (220) is adapted to determine a degree of asymmetrical change of the determined dimension change of the measurement nut (100), e.g. by means of a mathematical curve fitting method, such as a least squares method, a method of moments or a method of maximum likelihood,
preferably the analysis unit (220) being adapted to compare the degree of asymmetrical change to a preselectable threshold level, and
optionally the measurement system (200) further comprising a warning system (230), which is adapted to transmit a warning, such as an audial, a visual and/or a haptic warning.

## Patentansprüche

1. Verfahren zum Bestimmen einer Maßänderung einer Messmutter (100), wobei die Messmutter (100) einen Kontaktabschnitt (102), der zur Befestigung an einem Objekt, wie beispielsweise einer Schraube oder einer Gewindestange, geeignet ist, und einen Nichtkontaktabschnitt (104) umfasst, wobei der Kontaktabschnitt (102) und der Nichtkontaktabschnitt (104) koaxial, aber axial versetzt zueinander angeordnet sind, wobei die Messmutter (100) mit einer Messzone (106) bereitgestellt ist, die sich an einer oberen Oberfläche (108) des Nichtkontaktabschnitts (104) befindet, wobei das Verfahren umfasst
- Befestigen (310) von zumindest einem Teil des Kontaktabschnitts (102) an dem Objekt, wobei der Nichtkontaktabschnitt (104) keinen direkten Kontakt mit dem Objekt hat,
- Aussetzen (320) des Objekts einer äußeren Belastung, wodurch eine Maßänderung des Kontaktabschnitts (102) verursacht wird, und
- Bestimmen der Maßänderung (330) der Messmutter (100) durch eine Messung, die in der Messzone (106) des Nichtkontaktabschnitts (104) durchgeführt wird, wobei das Verfahren **dadurch gekennzeichnet ist, dass**
der Nichtkontaktabschnitt (104) der Messmutter (100) mindestens einen Schlitz (116a-d) aufweist, der sich zumindest teilweise in einer axialen Richtung (A) der Messmutter (100) erstreckt, vorzugsweise 1-10 Schlitze, mehr bevorzugt 2-6 Schlitze, am meisten bevorzugt 3-5 Schlitze, wobei der mindestens eine Schlitz (116a-d) dazu dient, die durch den Kontaktabschnitt (102) hervorgerufene Maßänderung des Nichtkontaktabschnitts (104) zu erhöhen.

2. Verfahren nach Anspruch 1, wobei die Messmutter (100) eine Hutmutter ist, die einen Hutteil (114) umfasst, der im Nichtkontaktabschnitt (104) der Messmutter (100) umfasst ist.

3. Verfahren nach Anspruch 1 oder 2, wobei die Messung in einer Messvertiefung (110) durchgeführt wird, die an der oberen Oberfläche (108) des Nichtkontaktabschnitts (104) bereitgestellt ist, wobei die Messvertiefung (110) vorzugsweise eine Tiefe im Bereich von 1 bis 4 mm aufweist, und/oder die Messung an oder um eine Längsachse der Messmutter (100) durchgeführt wird.

4. Verfahren nach einem der vorstehenden Ansprüche, wobei die Maßänderung mittels einer Sensoreinheit (210) bestimmt wird, die einen Sensor aus der Gruppe eines Dehnungsmessstreifens, eines kapazitiven Sensors, eines Kapazitätssensors, eines Wärmeleitfähigkeitssensors, eines piezoresistiven Sensors, eines piezokapazitiven Sensors, eines Sensors auf Photodiodenbasis, eines Ultraschallsensors, eines Drucksensors, eines organischen Dünnschichttransistorsensors, eines optischen Sensors, eines 3D-Scanners, eines Lineals, eines Messschiebers, eines Mikrometers, einer Fühlerlehre oder eines kombinierten Sensors aus mindestens einem dieser Sensoren umfasst, wobei der Sensor beispielsweise ein Array-Sensor ist.

5. Verfahren nach einem der vorstehenden Ansprüche, wobei die Messung mittels eines Musters durchgeführt wird, das in dem Nichtkontaktabschnitt (104) oder in dem Objekt enthalten ist, wobei das Muster intrinsisch oder bereitgestellt ist, z. B. eine Rille (122), und wobei das Verfahren umfasst
- Bestimmen des Musters durch einen Array-Sensor, z. B. eine Bilderfassungsvorrichtung,
- Ableiten von Maßinformationen aus dem Muster mittels Bildanalyse.

6. Verfahren nach einem der vorstehenden Ansprüche, wobei das Verfahren ferner umfasst
- Bestimmen (340) eines Grads der asymmetrischen Änderung der bestimmten Maßänderung der Messmutter (100), z. B. mittels einer mathematischen Kurvenanpassungsmethode, wie einem Verfahren der kleinsten Quadrate, einer Momentemethode oder einer Methode der maximalen Wahrscheinlichkeit, und wobei das Verfahren vorzugsweise ferner umfasst
- Vergleichen (350) des bestimmten Grads der asymmetrischen Änderung mit einem vorwählbaren Schwellenwert und der optionale Schritt des
- Übertragens (360) einer Warnung, beispielsweise einer akustischen, visuellen und/oder haptischen Warnung, wenn der bestimmte Grad der asymmetrischen Änderung den vorwählbaren Schwellenwert überschreitet.

7. Messmutter (100), umfassend
- einen Kontaktabschnitt (102), der zur Befestigung an einem Gegenstand, wie beispielsweise einem Bolzen oder einer Gewindestange, geeignet ist, und
- einen Nichtkontaktabschnitt (104),
wobei der Kontaktabschnitt (102) und der Nichtkontaktabschnitt (104) koaxial, jedoch axial versetzt zueinander angeordnet sind, wobei
die Messmutter (100) mit einer Messzone (106) bereitgestellt ist, die sich an einer oberen Oberfläche (108) des Nichtkontaktabschnitts (104) befindet, wobei die Messzone (106) zum Durchführen einer Messung an der Messzone (106) durch Bestimmen einer Maßänderung der Messmutter (100) angepasst ist, die an dem Objekt angebracht ist, wobei die Messmutter
**dadurch gekennzeichnet ist, dass**
der Nichtkontaktabschnitt (104) mindestens einen Schlitz (116a-d) umfasst, der sich in einer axialen Richtung (A) der Messmutter (100) erstreckt, vorzugsweise 1-10 Schlitze, bevorzugter 2-6 Schlitze, am meisten bevorzugt 3-5 Schlitze.

8. Messmutter (100) nach Anspruch 7, wobei die Messmutter (100) eine Hutmutter mit einem Hutteil (114), der im Nichtkontaktabschnitt (104) der Messmutter (100) umfasst ist.

9. Messmutter (100) nach einem der Ansprüche 7 bis 8, wobei der Nichtkontaktabschnitt (104) kein Gewinde aufweist.

10. Messmutter (100) nach einem der Ansprüche 7 bis 9, wobei die Messzone (106) eine Messvertiefung (110) umfasst, wobei die Messvertiefung (110) vorzugsweise eine Tiefe im Bereich von 1 bis 4 mm aufweist.

11. Messmutter (100, 500, 600) nach einem der Ansprüche 7 bis 10, wobei die Messzone (106; 506a-c; 606a, 606b) ein Muster umfasst, wobei das Muster inhärent oder aufgebracht sein kann, z. B. eine Rille (122, 522), wobei das Muster z. B. einen Kreis (122, 522), eine gerade Linie oder ein Punktmuster umfasst.

12. Messsystem (200), umfassend
- die Messmutter (100) nach einem der Ansprüche 7 bis 11,
- eine Sensoreinheit (210), die dazu ausgebildet ist, an die Messmutter (100) anzudocken, um eine Maßänderung des Nichtkontaktabschnitts (104) der Messmutter (100) durch Messung an oder mittels der Messzone (106) zu bestimmen, und
- eine Analyseeinheit (220), die dazu ausgebildet ist, eine Maßänderung der Messmutter (100) aus der bestimmten Maßänderung des Nichtkontaktabschnitts zu bestimmen (104).

13. Messsystem (200) nach Anspruch 12, wobei die Sensoreinheit (210) einen Sensor aus der Gruppe eines Dehnungsmessstreifens, eines kapazitiven Sensors, eines Kapazitätssensors, eines Wärmeleitfähigkeitssensors, eines piezoresistiven Sensors, eines piezokapazitiven Sensors, eines Sensors auf Photodiodenbasis, eines Ultraschallsensors, eines Drucksensors, eines organischen Dünnschichttransistorsensors, eines optischen Sensors, eines 3D-Scanners, eines Lineals, eines Messschiebers, eines Mikrometers, einer Fühlerlehre oder eines kombinierten Sensors mit mindestens einem dieser Sensoren umfasst, wobei der Sensor beispielsweise ein Array-Sensor ist, wobei vorzugsweise die Sensoreinheit (210) einen Array-Sensor umfasst, beispielsweise eine Bilderfassungsvorrichtung umfasst, und die Analyseeinheit (220) zur Bildanalyse angepasst ist.

14. Messsystem (200) nach einem der Ansprüche 12 bis 13, wobei die Analyseeinheit (220) dazu ausgebildet ist, einen Grad der asymmetrischen Änderung der bestimmten Maßänderung der Messmutter (100) zu bestimmen, z. B. mittels einer mathematischen Kurvenanpassungsmethode, wie einem Verfahren der kleinsten Quadrate, einer Momentemethode oder einer Methode der maximalen Wahrscheinlichkeit,
wobei die Analyseeinheit (220) vorzugsweise dazu ausgelegt ist, den Grad der asymmetrischen Veränderung mit einem vorwählbaren Schwellenwert zu vergleichen, und
wobei optional das Messsystem (200) ferner ein Warnsystem (230) umfasst, das dazu geeignet ist, eine Warnung, beispielsweise eine akustische, visuelle und/oder haptische Warnung, zu übermitteln.

## Revendications

1. Procédé de détermination d'un changement de dimension d'un écrou de mesure (100), l'écrou de mesure (100) comprenant une partie de contact (102), conçue pour être fixée à un objet, tel qu'un boulon ou une tige filetée, et une partie sans contact (104), la partie de contact (102) et la partie sans contact (104) étant situées de manière coaxiale, mais décalées de manière axiale, l'une par rapport à l'autre, l'écrou de mesure (100) étant pourvu d'une zone de mesure (106) située sur une surface supérieure (108) de la partie sans contact (104), le procédé comprenant
- la fixation (310) au moins d'un élément de la partie de contact (102) à l'objet, la partie sans contact (104) n'étant pas en contact direct avec l'objet,
- l'exposition (320) de l'objet à une charge externe, provoquant ainsi un changement de dimension de la partie de contact (102), et
- la détermination du changement de dimension (330) de l'écrou de mesure (100) par une mesure réalisée dans la zone de mesure (106) de la partie sans contact (104), le procédé **étant caractérisé en ce que**
la partie sans contact (104) de l'écrou de mesure (100) comprend au moins une fente (116a-d) s'étendant au moins partiellement dans une direction axiale (A) de l'écrou de mesure (100), de préférence 1 à 10 fentes, plus préférablement 2 à 6 fentes, idéalement 3 à 5 fentes, l'au moins une fente (116ad) étant utilisée pour augmenter le changement de dimension de la partie sans contact (104) induite par rapport à la partie de contact (102).

2. Procédé selon la revendication 1, dans lequel l'écrou de mesure (100) est un écrou bouché comprenant une partie bouchée (114), qui est comprise dans la partie sans contact (104) de l'écrou de mesure (100).

3. Procédé selon la revendication 1 ou 2, dans lequel la mesure est réalisée dans un renfoncement de mesure (110) prévu sur la surface supérieure (108) de la partie sans contact (104), de préférence le renfoncement de mesure (110) présentant une profondeur comprise entre 1 et 4 mm, et/ou la mesure est réalisée au niveau ou autour d'un axe de longueur de l'écrou de mesure (100).

4. Procédé selon l'une quelconque des revendications précédentes, dans lequel le changement de dimension est déterminé au moyen d'une unité de capteur (210) comprenant un capteur du groupe des jauges de contrainte, un capteur capacitif, un capteur de capacité, un capteur de conductivité thermique, un capteur piézo-résistif, un capteur piézo-capacitif, un capteur à base de photodiodes, un capteur ultrasonore, un capteur de pression, un capteur à transistor organique à couches minces, un capteur optique, un dispositif de balayage 3D, une règle, un compas, un micromètre, une jauge d'épaisseur ou un capteur combiné comportant au moins l'un de ces capteurs, le capteur étant par exemple un capteur à barrette.

5. Procédé selon l'une quelconque des revendications précédentes, dans lequel la mesure est réalisée au moyen d'un motif compris dans la partie sans contact (104) ou compris dans l'objet, le motif étant intrinsèque ou fourni, par exemple une rainure (122), et dans lequel le procédé comprend
- la détermination du motif par un capteur à barrette, par exemple un dispositif d'acquisition d'images,
- l'utilisation de l'analyse d'image pour obtenir des informations de dimension à partir du motif.

6. Procédé selon l'une quelconque des revendications précédentes, dans lequel le procédé comprend en outre
- la détermination (340) d'un degré de changement asymétrique du changement de dimension déterminé de l'écrou de mesure (100), par exemple au moyen d'une méthode mathématique d'ajustement de courbe, telle qu'une méthode des moindres carrés, une méthode des moments ou une méthode du maximum de vraisemblance, et dans lequel le procédé comprend de préférence en outre
- la comparaison (350) du degré déterminé de changement asymétrique à un niveau de seuil présélectionnable, et l'étape facultative consistant à
- transmettre (360) un avertissement, tel qu'un avertissement sonore, visuel et/ou haptique, lorsque le degré déterminé de changement asymétrique dépasse le niveau de seuil présélectionnable.

7. Écrou de mesure (100) comprenant
- une partie de contact (102), conçue pour être fixée à un objet, tel qu'un boulon ou une tige filetée, et
- une partie sans contact (104),
la partie de contact (102) et la partie sans contact (104) étant situées de manière coaxiale, mais décalées de manière axiale l'une par rapport à l'autre, dans lequel
l'écrou de mesure (100) est pourvu d'une zone de mesure (106) située sur une surface supérieure (108) de la partie sans contact (104), la zone de mesure (106) étant conçue pour réaliser une mesure dans la zone de mesure (106) en déterminant un changement de dimension de l'écrou de mesure (100) fixé à l'objet, l'écrou de mesure étant **caractérisé en ce que**
la partie sans contact (104) comprend au moins une fente (116a-d) s'étendant dans la direction axiale (A) de l'écrou de mesure (100), de préférence de 1 à 10 fentes, plus préférablement de 2 à 6 fentes, idéalement de 3 à 5 fentes.

8. Écrou de mesure (100) selon la revendication 7, dans lequel l'écrou de mesure (100) est un écrou bouché comprenant une partie bouchée (114), qui est comprise dans la partie sans contact (104) de l'écrou de mesure (100).

9. Écrou de mesure (100) selon l'une quelconque des revendications 7 à 8, dans lequel la partie sans contact (104) n'est pas filetée.

10. Écrou de mesure (100) selon l'une quelconque des revendications 7 à 9, dans lequel la zone de mesure (106) comprend un renfoncement de mesure (110), de préférence le renfoncement de mesure (110) présentant une profondeur dans la plage comprise entre 1 et 4 mm.

11. Écrou de mesure (100, 500, 600) selon l'une quelconque des revendications 7 à 10, dans lequel la zone de mesure (106 ; 506a-c; 606a, 606b) comprend un motif, le motif étant intrinsèque ou appliqué, par exemple une rainure (122, 522), le motif comprenant par exemple un cercle (122, 522), une ligne droite ou un motif de points.

12. Système de mesure (200), comprenant
- l'écrou de mesure (100) selon l'une quelconque des revendications 7 à 11,
- une unité de capteur (210) conçue pour s'arrimer à l'écrou de mesure (100) afin de déterminer un changement de dimension de la partie sans contact (104) de l'écrou de mesure (100) en mesurant au niveau ou au moyen de la zone de mesure (106), et
- une unité d'analyse (220) conçue pour déterminer un changement de dimension de l'écrou de mesure (100) à partir du changement de dimension déterminé de la partie sans contact (104).

13. Système de mesure (200) selon la revendication 12, dans lequel l'unité de capteur (210) comprend un capteur du groupe d'une jauge de contrainte, d'un capteur capacitif, d'un capteur de capacité, d'un capteur de conductivité thermique, d'un capteur piézorésistif, d'un capteur piézocapacitif, d'un capteur à base de photodiodes, d'un capteur ultrasonore, d'un capteur de pression, d'un capteur à transistor organique à couches minces, d'un capteur optique, d'un dispositif de balayage 3D, d' une règle, d'un compas, d'un micromètre, d'une jauge d'épaisseur ou d'un capteur combiné comportant au moins un parmi ces capteurs, le capteur étant par exemple un capteur à barrette, de préférence l'unité de capteur (210) comprenant un capteur à barrette, par exemple comprenant un dispositif d'acquisition d'images et l'unité d'analyse (220) étant conçue pour l'analyse d'images.

14. Système de mesure (200) selon l'une quelconque des revendications 12 à 13, dans lequel l'unité d'analyse (220) est conçue pour déterminer un degré de changement asymétrique du changement de dimension déterminé de l'écrou de mesure (100), par exemple au moyen d'une méthode mathématique d'ajustement de courbe, telle qu'une méthode des moindres carrés, une méthode des moments ou une méthode du maximum de vraisemblance,
de préférence, l'unité d'analyse (220) est conçue pour comparer le degré de changement asymétrique à un niveau de seuil présélectionnable, et
éventuellement, le système de mesure (200) comprend en outre un système d'avertissement (230), qui est conçu pour transmettre un avertissement, tel qu'un avertissement sonore, visuel et/ou haptique.
